# EUROPEAN PATENT SPECIFICATION

(11) **EP 3 099 402 B1**
(45) Date of publication and mention of the grant of the patent: **06.01.2021**
(21) Application number: 15762020.4
(22) Date of filing: 27.01.2015
(51) Int. Cl.: C01B 32/16, B01D 53/86

(54) **SYSTEM FOR PRODUCING CARBON NANOTUBES FROM COMBUSTION ENGINE EXHAUSTS**
SYSTEM ZUR HERSTELLUNG VON KOHLENSTOFFNANORÖHRCHEN AUS VERBENNUNGSMOTORABGASEN
SYSTÈME DE PRODUCTION DE NANOTUBES DE CARBONE À PARTIR D'ÉCHAPPEMENTS DE MOTEUR À COMBUSTION

(30) Priority: 28.01.2014 US 201414166448
(43) Date of publication of application: 07.12.2016
(73) Proprietor: United Arab Emirates University, Al Ain (AE)
(72) Inventor: HAIK, Yousef, Al Ain (AE); ALDAJAH, Saud, Al Ain (AE)
(74) Representative: Westphal, Mussgnug & Partner Patentanwälte mbB
(86) International application number: PCT/IB2015/001097
(87) International publication number: WO 2015/136385

(56) References cited:
- WO-A1-2013/110202
- US-A1- 2011 000 198
- US-B2- 7 935 175
- US-B2- 8 480 992
- HEEJUNG S. JUNG ET AL: "Carbon nanotubes among diesel exhaust particles: real samples or contaminants?", JOURNAL OF THE AIR & WASTE MANAGEMENT ASSOCIATION, vol. 63, no. 10, 18 June 2013 (2013-06-18) , pages 1199-1204, XP055211885, ISSN: 1096-2247, DOI: 10.1080/10962247.2013.812048
- SAUD ALDAJAH ET AL: "A Novel Dual Effect Soot Filtering System", JJMIE, JORDAN JOURNAL OF MECHANICAL AND INDUSTRIAL ENGINEERING, vol. 4, no. 1, 1 January 2010 (2010-01-01) , pages 75-78, XP055392298, ISSN: 1995-6665

## Description

### FIELD OF THE INVENTION

This invention relates to a system and method that converts automotive exhaust waist to carbon nanotubes.

### BACKGROUND OF THE INVENTION

Incomplete combustion, particularly in diesel engines, produces black carbon and many hydrocarbon gases that can contribute to global warming and potential health hazards. Oxidation catalysts that convert hydrocarbon and carbon monoxide into carbon dioxide and water are known in the literature. Ceramic filters that are known for their efficiency to remove 90% of the particulates require temperatures at least as high as 500 degrees Celsius and oxygen rich exhaust conditions. Filtration systems adapted to capture particulates have been disclosed in U.S. Patent Nos. 5,167,765 and 5,755,963. Nonetheless, conventional filters do not teach the conversion of waste from combustion engine exhaust into a commercially viable product. Heejun S. Jung et al. ("Carbon nanotubes among diesel exhaust particles: real samples or contaminants?", Journal of the Air & Waste Management Association, vol. 63, no. 10, October 1, 2013, pages 1199-1204) have also studied the formation mechanisms of carbon nanotubes during diesel combustion using a fuel containing ferrocene.

### SUMMARY OF THE INVENTION

A system and method converting exhaust waste of a combustion engine to carbon nanotubes within an exhaust system in fluid communication with the combustion engine is disclosed. The method comprises generating combustion engine exhaust through combustion of a fuel, heating at least one filter to at least 200 degrees Celsius, and passing combustion engine exhaust past the at least one filter positioned within the exhaust system of the combustion engine, wherein carbon nanotubes form on an exposed surface of the at least one filter. Such a method is known from US 2011/0000198 A1. According to the invention, the fuel includes a metal salt and generating combustion engine exhaust through combustion of a fuel comprises generating combustion engine exhaust through combustion of a diesel fuel including an iron salt having a concentration of between one mg of metal salt/ml of fuel and four mg of metal salt/ml of fuel, wherein the diesel fuel is formed from a mixture of algal biodiesel fuel and fossil diesel fuel. In at least one embodiment, the system may include a filter and a process that converts waist exhaust of combustion engines into carbon nanotubes. The combustion engine may be used in numerous applications, such as, but not limited to, being used as an automotive combustion engine. In at least one embodiment, aspects of the system and method include the filter material, treatment of the filter material, alignment of the filter material and process that yields the maximum amount of carbon nanotubes. The system and
method may also include use of a fuel 18 with one or more metal salts that once combusted within a combustion engine produce carbon nanotubes downstream of a combustion chamber, such as, but not limited to, within the exhaust system.

In at least one embodiment, the system includes a filter and a process to synthesize carbon nanotubes from automotive engine exhaust waste. In one embodiment, the filter may be composed of iron plates that are polished prior to placement in the exhaust system. In another embodiment, thin, metallic film made from Fe, Al, Ni, and Co may be deposited on metallic or nonmetallic layers and placed in the streamline of the exhaust waste. The system may be installed on currently existing exhaust systems with only minor modifications. The filter of the system may function singularly or in conjunction with other filtration systems. The carbon nanotubes that may form on the filter surfaces are recoverable and may be utilized for many carbon nanotube (CNT) applications.

The method of converting exhaust waste of combustion engines to carbon nanotubes within an exhaust system in fluid communication with the combustion engine includes generating combustion engine exhaust through combustion of a fuel including a metal salt and heating one or more filters to at least 200 degrees Celsius. The filet may be placed downstream of a combustion engine, such as within an exhaust system. One or more metal salts, such as, but not limited to, iron salts, may be suspended in diesel fuel to provide a catalyst for carbon nanotube formation. The suspension may be formed by introducing one or more metal salts into algal biodiesel or fatty acids containing oil that is mixed in ethanol and then introduced into the fossil fuel diesel to make homogenous suspension. The metal salt increases the formation of carbon nanotubes on the filter.

These and other embodiments are described in more detail below.

### BRIEF DESCRIPTION OF THE FIGURES

The accompanying drawings, which are incorporated in and form a part of the specification, illustrate embodiments of the presently disclosed invention and, together with the description, disclose the principles of the invention.
FIG. 1 is a SEM monograph showing the formation of particulates on a polymeric filter placed in the pathway of exhaust.
FIG. 2 is a SEM monograph showing the formation of particulates on the filter material in absence of a localized heating.
FIG. 3 is a SEM monograph showing the formation of carbon nanotubes when the filter is placed horizontally along the streamlines of the exhaust waste.
FIG. 4 is a SEM monograph showing the formation of carbon nanotubes when the filter is placed at 5 degrees Celsius from the exhaust streamlines.
FIG. 5 is a SEM monograph showing the formation of particulates on a filter placed in the pathway of exhaust from combustion of a fuel 18 having iron salt concentration of 2 mg/ml.
FIG. 6 is a SEM monograph showing the formation of particulates on a filter placed in the pathway of exhaust from combustion of a fuel 18 having iron salt concentration of 1 mg/ml.
FIG. 7 is a SEM monograph showing the formation of particulates on a filter placed in the pathway of exhaust from combustion of a fuel 18 having iron salt concentration of 0.05 mg/ml.
FIG. 8 is a schematic diagram of the system usable to convert exhaust waste of a combustion engine to carbon nanotubes within an exhaust system in fluid communication with a combustion engine.

### DESCRIPTION OF THE INVENTION

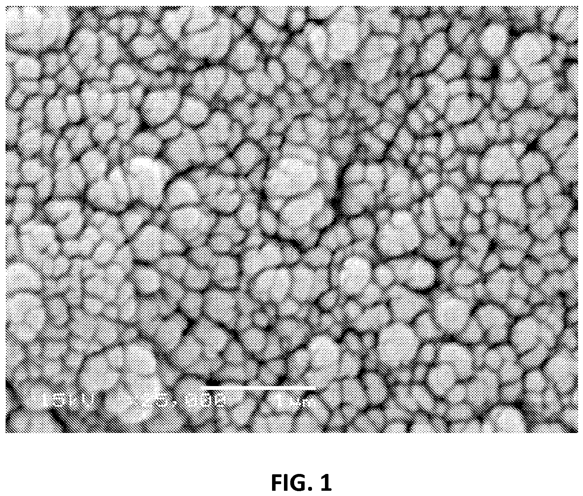

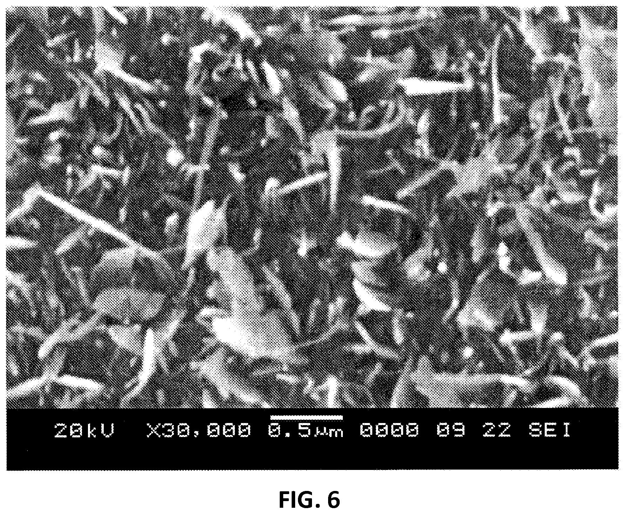

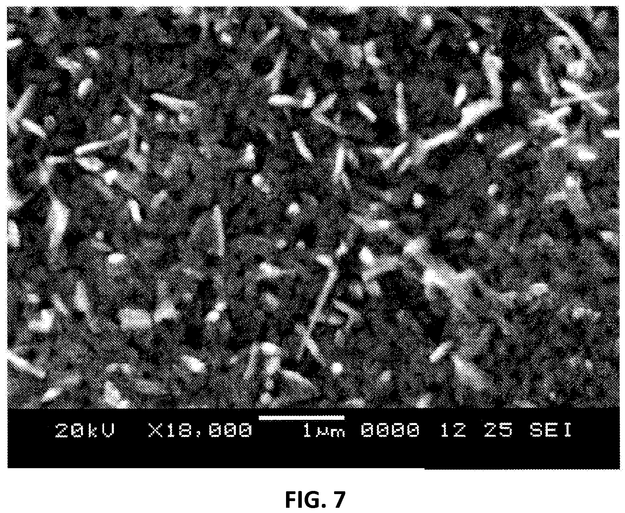

As shown in Figure 1-8, a system 10 and method converting exhaust waste of a combustion engine 12 to carbon nanotubes within an exhaust system 14 in fluid communication with the combustion engine 12 is disclosed. In at least one embodiment, the system 10 may include a filter 16 and a process that converts waste exhaust of combustion engines 12 into carbon nanotubes. The combustion engine 12 may be used in numerous applications, such as, but not limited to, being used as an automotive combustion engine. In at least one embodiment, aspects of the system 10 and method include the filter material 16, treatment of the filter material, alignment of the filter material and process that yields the maximum amount of carbon nanotubes. The system 10 and method may also include use of a fuel 18 with one or more metal salts that once combusted within a combustion engine 12 produce carbon nanotubes downstream of a combustion chamber, such as, but not limited to, within the exhaust system 14.

In at least one embodiment, the system 10 may include a filter 16 placed downstream of the combustion engine 12. The filter 16 may be formed from any appropriate material capable of withstanding the environment, such as the heat generated by the combustion engine 12. In at least one embodiment, the filter 16 may be formed from filter material that is thin, such as less than one mm in thickness, and may be formed from a metal, such as but not limited to iron metal. In at least one embodiment, the filter material forming the filter 16 may be formed from pure iron such as, but not limited to, pure iron sheets. In another embodiment, the filters 16 may be formed from carbonated steal with low percentage of carbon, such as, but not limited to, 0.05 or less carbon. In yet another embodiment, a thin layer of iron may be posted on a polymeric or metallic sheet. The thin layer may be produced by one or more physical processes, such as, but not limited to, pulse laser deposition or ablation processes.

In the event of using carbonated steel, or iron, a polishing scheme may be used to expose the iron grains on the surface. Such processes may not be needed for thin layer depositions as described before.

The filter 16 may be positioned in the path of the exhaust waste of a combustion engine, such as an automotive engine. The filter 16 may be placed at an angle below 45 degrees and, in at least one embodiment, may be placed below 15 degrees measured from the streamline of the exhaust waste. In at least one embodiment, the filter 16 may be placed at an angle to the exhaust flow of between 5 degrees and 15 degrees. As such, combustion engine exhaust may be directed past the filter 16 having a surface skewed relative to exhaust flow an angle between 5 degrees and 15 degrees.

Localized heating of the filter 16 or its surrounding is required to activate the carbon nanotubes formation. Though a temperature in the range of 700 degrees Celsius is preferred, temperatures as low as 200 degrees Celsius have shown carbon nanotubes formation. The efficiency of the tube formation is a function of the filter angle and the temperature at the filter location. In at least one embodiment, carbon nanotubes may form on an exposed surface of the filter 16 such that the carbon nanotubes may be formed from multiwall carbon nanotubes having an average diameter of between 20 and 50 nm and average length of between one micrometer and 10 micrometers.

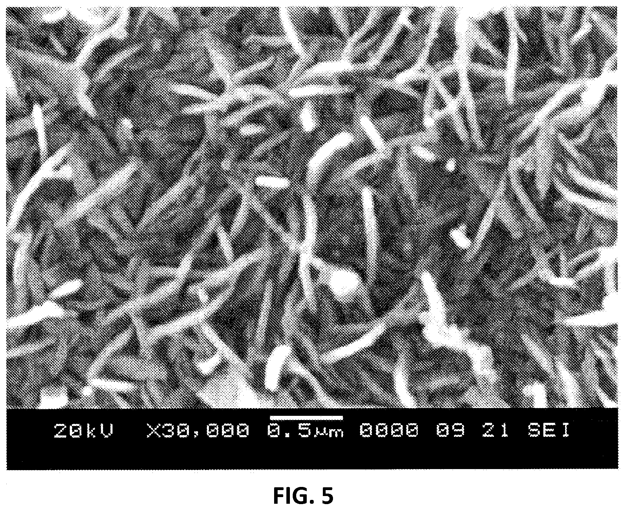

The method of converting exhaust waste of combustion engines 12 to carbon nanotubes, as shown in Figures 5-7, within an exhaust system 14 in fluid communication with the combustion engine 12 includes generating combustion engine exhaust through combustion of a fuel 18 including a metal salt and heating one or more filters 16 to at least 200 degrees Celsius. The method also includes passing combustion engine exhaust past the filter 16 positioned within the exhaust system 14 of the combustion engine 12, wherein carbon nanotubes form on an exposed surface of the filter 16.

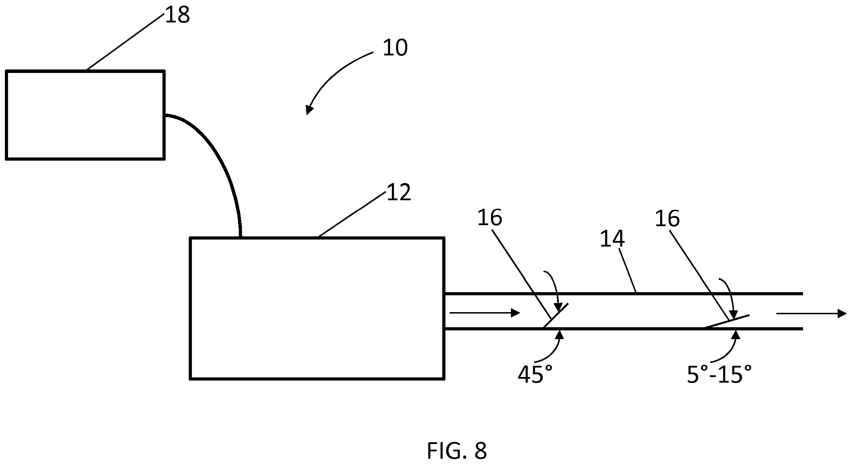

In at least one embodiment, the method may include a process for converting diesel engine exhaust gases into carbon nanotubes. As shown in Figure 8, one or more filters 16 may be placed downstream of the combustion engine 12 in at least a portion of the exhaust gases flowing from the combustion engine 12. The method includes generating combustion engine exhaust through combustion of a fuel 18 including a metal salt whereby the metal salt includes an iron salt. The metal salt is used in a concentration between about one mg of metal salt/ml of fuel 18 and four mg of metal salt/ml of fuel 18. Concentrations less than this range and without a metallic substrate do not generate carbon nanotubes. In at least one embodiment, the metal salt may have a concentration of two mg of metal salt/ml of fuel 18.

The metal salt is used together with a fuel 18, which is a mixture of algal biodiesel fuel 18 and fossil diesel fuel 18. The utilization of algal biodiesel fuel 18 promotes formation of carbon nanotubes by suspending the iron salt within the fossil diesel fuel 18. In another embodiment, the fuel 18 may be a mixture of algal biodiesel fuel 18, ethanol and fossil diesel fuel 18. The fuel 18 may be formed by introducing one or more metal salts into algal biodiesel to form a mixture. The mixture of one or more metal salts into algal biodiesel may then be mixed into the fossil diesel fuel 18 to form a homogenous suspension. The algal biodiesel creates a homogenous suspension of the iron salt in fossil fuel 18 diesel. The presence of the metal salt increases the formation of carbon nanotubes on the filer 16.

In at least one embodiment, the diesel fuel 18 may be formed from a mixture of between one percent and ten percent algal biodiesel fuel 18, between one percent and ten percent ethanol and remainder fossil diesel fuel 18. In another embodiment, the diesel fuel 18 may be formed from a mixture of about five percent algal biodiesel fuel 18, about five percent ethanol and about 90 percent fossil diesel fuel 18. Combustion of fuel 18, such as but not limited to diesel fuel 18, with metal salts, such as, but not limited to one or more iron salts, improves the combustion quality and reduces the formation of soot. The inclusion of biodiesel together with the fossil fuel 18 diesel may help to reduce environmental hazards, such as, but not limited to, CO(x) and SO(x).

### EXAMPLES

The following examples are not to limit the scope of the invention but to illustrate the invention. A filter made out of a solid structure such as, but not limited to, carbonated steel, was placed in the pathway of a diesel engine exhaust. The engine was allowed to run at normal operation condition for half an hour. The filter was recovered and evaluated using SEM. FIG. 1 shows a monograph of the material collected on the solid filter. It showed clumps of carbon particulates.

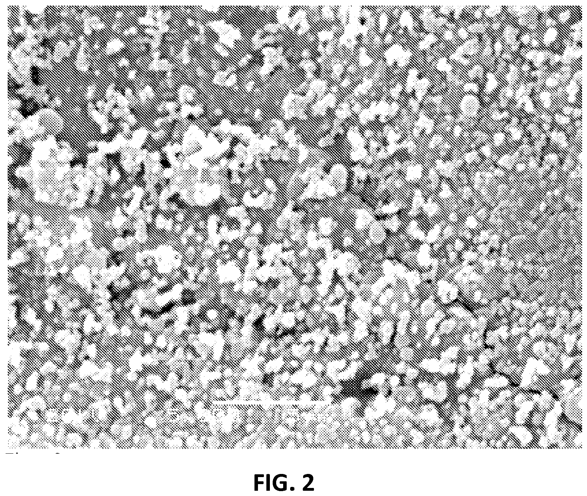

A filter made out of carbonated steel was polished using techniques known in the literature. The surface was examined using optical microscopy. The grains were clearly shown. The filter was placed in the pathway of a diesel engine exhaust. The engine was allowed to run for half an hour under normal operation conditions. The filter was collected and examined using SEM. FIG. 2 shows SEM monograph of the materials collected on the surface of the filter. It shows clumps of carbonated materials.

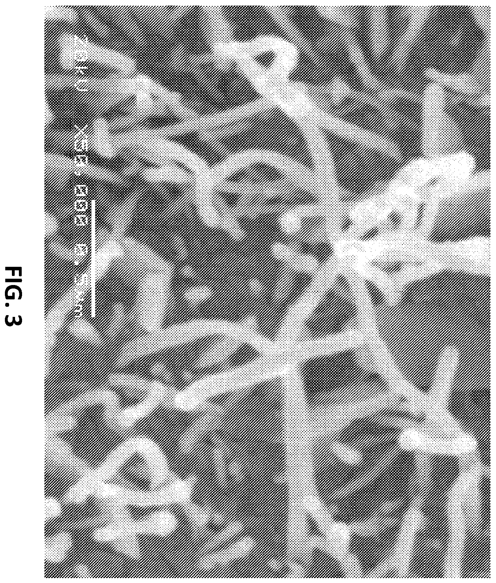

A similar filter made out of carbonated steel was polished and placed in the pathway of the exhaust horizontally to the exhaust streamlines. The filter zone was heated using a gas burner. The diesel engine was allowed to run in normal condition for half an hour. The filter material was collected and examined using SEM. FIG. 3 shows SEM monograph showing the formation of carbon nanotubes.

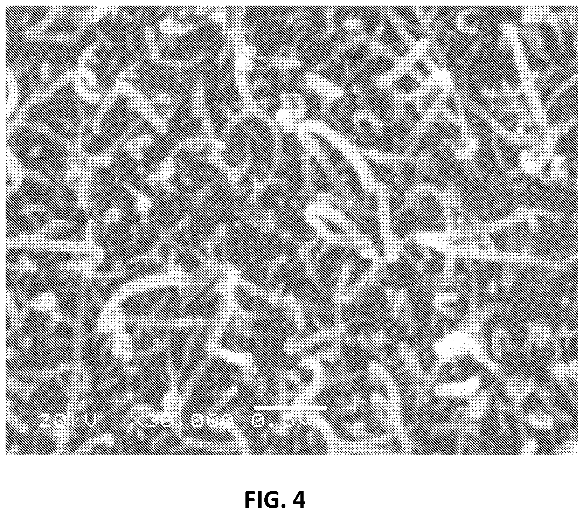

A similar filter made out of carbonated steel was polished and placed in the pathway of the exhaust of a diesel engine at an angle of 5 degrees to the streamlines of the exhaust. A diesel engine was allowed to run under normal operating conditions for half an hour. The filter location was heated using a gas burner. The filter was collected an examined using SEM. FIG. 4 shows a monograph of the filter surface with carbon nanotubes formed on the surface. It is noticeable that the angle of 5 degrees influenced the formation of more carbon nanotubes.

The produced carbon nanotubes are purified by immersing the filter plate in a ionic liquid bath. The purification process using ionic liquids produces 95% purified carbon nanotubes. Without limitation to the composition, ionic liquids have the ability to dissolve carbonated materials other than carbon nanotubes leaving a highly purified carbon nanotube stock.

## Claims

1. A method of converting exhaust waste of combustion engines to carbon nanotubes within an exhaust system in fluid communication with the combustion engine, comprising:
generating combustion engine exhaust through combustion of a fuel 18;
heating at least one filter to at least 200 degrees Celsius; and
passing combustion engine exhaust past the at least one filter positioned within the exhaust system of the combustion engine, wherein carbon nanotubes form on an exposed surface of the at least one filter,
**characterized in that** the fuel includes a metal salt and generating combustion engine exhaust through combustion of a fuel comprises generating combustion engine exhaust through combustion of a diesel fuel including an iron salt having a concentration of between one mg of metal salt/ml of fuel and four mg of metal salt/ml of fuel, wherein the diesel fuel is formed from a mixture of algal biodiesel fuel and fossil diesel fuel.

2. The method of claim 1, wherein the diesel fuel is formed from a mixture of algal biodiesel fuel, ethanol and fossil diesel fuel.

3. The method of claim 1, wherein the diesel fuel is formed from a mixture of between one percent and ten percent algal biodiesel fuel, between one percent and ten percent ethanol and remainder fossil diesel fuel.

4. The method of claim 1, wherein the diesel fuel is formed from a mixture of about five percent algal biodiesel fuel, about five percent ethanol and about 90 percent fossil diesel fuel.

5. The method of claim 1, wherein passing combustion engine exhaust past the at least one filter comprises passing combustion exhaust past a surface formed of iron.

6. The method of claim 1, wherein passing combustion engine exhaust past the at least one filter comprises passing combustion exhaust past a surface formed of carbonated steel.

7. The method of claim 1, wherein passing combustion engine exhaust past the at least one filter comprises passing combustion exhaust past a surface formed of a layer formed from a material selected from a group consisting of iron, nickel and aluminum deposited on a surface.

8. The method of claim 1, wherein passing combustion engine exhaust past the at least one filter comprises passing combustion exhaust past the at least one filter having a surface skewed relative to exhaust flow at an angle less than 45 degrees.

9. The method of claim 1, wherein heating the at least one filter to at least 200 degrees Celsius comprises heating the at least one filter to a temperature between 200-700 degrees C.

## Patentansprüche

1. Verfahren zum Umwandeln von Abgasabfällen von Verbrennungsmotoren in Kohlenstoff-Nanoröhren innerhalb eines Abgassystems in Fluid-Verbindung mit dem Verbrennungsmotor, das aufweist:
Erzeugung von Verbrennungsmotorabgas durch Verbrennung eines Kraftstoffs 18;
Erhitzen zumindest eines Filters auf mindestens 200 Grad Celsius; und
Vorbeiführen von Verbrennungsmotorabgas an dem zumindest einen Filter, der innerhalb des Abgassystems des Verbrennungsmotors angeordnet ist, wobei sich Kohlenstoff-Nanoröhren auf einer freiliegenden Oberfläche des zumindest einen Filters bilden,
**dadurch gekennzeichnet, dass** der Kraftstoff ein Metallsalz enthält und das Erzeugen von Verbrennungsmotorabgas durch Verbrennung eines Kraftstoffs das Erzeugen von Verbrennungsmotorabgas durch Verbrennung eines Dieselkraftstoffs aufweist, der ein Eisensalz mit einer Konzentration zwischen einem mg Metallsalz/ml Kraftstoff und vier mg Metallsalz/ml Kraftstoff enthält, wobei der Dieselkraftstoff aus einem Gemisch aus Algen-Biodieselkraftstoff und fossilem Dieselkraftstoff gebildet ist.

2. Verfahren nach Anspruch 1, wobei der Dieselkraftstoff aus einem Gemisch aus Algen-Biodieselkraftstoff, Ethanol und fossilem Dieselkraftstoff gebildet ist.

3. Verfahren nach Anspruch 1, wobei der Dieselkraftstoff aus einem Gemisch von zwischen einem Prozent und zehn Prozent Algen-Biodieselkraftstoff, zwischen einem Prozent und zehn Prozent Ethanol und dem Rest aus fossilem Dieselkraftstoff gebildet ist.

4. Verfahren nach Anspruch 1, bei dem der Dieselkraftstoff aus einem Gemisch von etwa fünf Prozent Algen-Biodieselkraftstoff, etwa fünf Prozent Ethanol und etwa 90 Prozent fossilem Dieselkraftstoff gebildet ist.

5. Verfahren nach Anspruch 1, wobei das Vorbeiführen des Verbrennungsmotorabgases an dem zumindest einem Filter das Vorbeiführen von Verbrennungsabgas an einer aus Eisen gebildeten Oberfläche aufweist.

6. Verfahren nach Anspruch 1, wobei das Vorbeiführen von Verbrennungsmotorabgas an dem zumindest einen Filter das Vorbeiführen von Verbrennungsabgas an einer aus karbonisiertem Stahl gebildeten Oberfläche aufweist.

7. Verfahren nach Anspruch 1, wobei das Vorbeiführen von Verbrennungsmotorabgas an dem zumindest einen Filter das Vorbeiführen von Verbrennungsabgas an einer Oberfläche umfasst, die aus einer Schicht gebildet ist, die aus einem Material gebildet ist, das aus einer Gruppe ausgewählt ist, die aus Eisen, Nickel und Aluminium besteht, das auf einer Oberfläche abgeschieden ist.

8. Verfahren nach Anspruch 1, wobei das Vorbeiführen von Verbrennungsmotorabgas an dem zumindest einen Filter das Vorbeiführen von Verbrennungsabgas an dem zumindest einen Filter, der eine Oberfläche aufweist, die relativ zum Abgasstrom in einem Winkel von weniger als 45 Grad geneigt ist, aufweist.

9. Verfahren nach Anspruch 1, wobei das Erhitzen des zumindest einen Filters auf mindestens 200 Grad Celsius das Erhitzen des zumindest einen Filters auf eine Temperatur zwischen 200-700 Grad C aufweist.

## Revendications

1. Procédé de conversion de gaz d'échappement de moteur à combustion interne en nanotubes de carbone dans le système d'échappement en liaison fluidique avec le moteur à combustion,
procédé consistant à :
- générer des gaz d'échappement de combustion du moteur par la combustion d'un combustible (18),
- chauffer au moins un filtre à au moins 200°C, et
- faire passer les gaz de combustion sur au moins un filtre placé dans le système d'échappement du moteur à combustion, les nanotubes de carbone formant une surface exposée d'au moins un filtre,
procédé **caractérisé en ce que**
le combustible contient un sel de métal, et
générer des gaz d'échappement de combustion par la combustion d'un combustible consiste à générer des gaz d'échappement de moteur à combustion par la combustion d'un carburant contenant un sel de fer ayant une concentration comprise entre 1 mg sel de métal/ml de carburant et 4 mg de métal/fer-ml de carburant, le gazole étant formé d'un mélange d'algo-biogazole et de gazole fossile.

2. Procédé selon la revendication 1,
selon lequel
le gazole est formé d'un mélange d'algo-gazole biologique, d'éthanol et de gazole fossile.

3. Procédé selon la revendication 1,
selon lequel
le gazole est formé d'un mélange entre 1% et 10% d'algol-biogazole, entre 1% et 10% d'éthanol, le restant étant du gasoil fossile.

4. Procédé selon la revendication 1,
selon lequel
le gazole est formé d'un mélange d'environ 5% d'algol-biogazole, d'environ 5% d'éthanol et d'environ 90% de gazole fossile.

5. Procédé selon la revendication 1,
selon lequel
au passage de l'échappement du moteur à combustion, le passage d'au moins un filtre consiste à faire passer les gaz d'échappement à travers une surface en fer.

6. Procédé selon la revendication 1,
selon lequel
le passage des gaz de combustion à travers au moins un filtre consiste à faire passer les gaz de combustion à travers une surface d'acier au carbone.

7. Procédé selon la revendication 1,
selon lequel
le passage des gaz de combustion à travers au moins un filtre consiste à faire passer les gaz de combustion à travers une surface formée d'une couche d'une matière choisie dans le groupe comprenant : fer, nickel, aluminium, déposé sur une surface.

8. Procédé selon la revendication 1,
selon lequel
le passage des gaz de combustion du moteur par au moins un filtre consiste à faire passer les gaz d'échappement de combustion dans au moins un filtre ayant une surface inclinée par rapport au flux d'échappement suivant un angle inférieur à 45°.

9. Procédé selon la revendication 1,
selon lequel
chauffer au moins un filtre à au moins 200 degrés Celsius consiste à chauffer au moins un filtre à une température comprise entre 200 et 700 degrés C.
